# EUROPÄISCHE PATENTANMELDUNG

(11) **EP 1 987 975 A2**
(43) Veröffentlichungstag der Anmeldung: **05.11.2008**
(21) Anmeldenummer: 08007340.6
(22) Anmeldetag: 15.04.2008
(51) Int. Cl.: B60J 7/14

(54) **Verdeck eines Cabriolets**

(30) Priorität: 03.05.2007 DE 102007020772
(71) Anmelder: Webasto AG, 82131 Stockdorf (DE)
(72) Erfinder: Finckh, Cornelia, 82131 Stockdorf (DE); Nguyen, Ngoc, 81927 München (DE)

(57) **Zusammenfassung**

Es wird Verdeck eines Cabriolets vorgeschlagen, mit mindestens einem starren Verdeckelement und einer Innenverkleidung (10), die das Verdeckelement innenseitig überspannt und bezogen auf die Fahrzeuglängsmittelebene beidseits jeweils zumindest ein Klappelement (16A, 16B, 18A, 18B) umfasst, das beim Öffnen des Verdecks aus einem Bewegungspfad eines Verdeckgestänges geklappt wird, und an dem ein Zugseil (24) befestigt ist, mittels dessen ein Schwenkvorgang des jeweiligen Klappelements (16A, 16B, 18A, 18B) auslösbar ist. Die Klappelemente (16A, 16B, 18A, 18B) umfassen jeweils einen im Wesentlichen starren Trägerkörper (20), der an dem jeweiligen Verdeckgestänge schwenkbar montiert ist. Die Trägerkörper (20) weisen erfindungsgemäß jeweils einen fensterartigen Ausschnitt (32) auf, der von einem Fixierblock (30) für das jeweilige Zugseil übergriffen ist, der an der dem Fahrzeuginnenraum zugewandten Seite mindestens einen Befestigungskanal (33) für das Zugseil (24) aufweist.

## Beschreibung

Die Erfindung betrifft ein Verdeck eines Cabriolets mit den Merkmalen des Oberbegriffs des Patentanspruchs 1.

Ein derartiges Verdeck ist aus der Praxis bekannt und ist insbesondere als so genanntes RHT (retractable hardtop) ausgebildet, das ein aus starren Dachelementen bestehendes Fahrzeugdach darstellt, welches durch Antrieb von Verdeckgestängen, die in seitlichen Randbereichen der Dachelement angelenkt und im Bereich des Fahrzeughecks gelagert sind, aus einer den Fahrzeuginnenraum überdeckenden Schließstellung in eine den Fahrzeuginnenraum freigebende Öffnungsstellung verbringbar ist, in der es in einem fahrzeugheckseitig angeordneten Verdeckablagekasten abgelegt ist.

Derartige Verdecke weisen häufig eine Innenverkleidung auf, welche das bzw. die Verdeckelemente und die Verdeckgestänge innenseitig überspannt. Gegebenenfalls kann es erforderlich sein, bezogen auf die Fahrzeugslängsmittelebene beidseits im Verkleidungsbereich der Seitenränder der starren Dachelemente und/oder im Verkleidungsbereich der Verdeckgestänge jeweils zumindest einen Klappabschnitt an der Innenverkleidung vorzusehen, der zum Öffnen des Verdecks in Richtung der Fahrzeuglängsmittelebene abgeklappt werden kann, so dass das jeweilige Verdeckgestänge seine Bewegung durchführen kann, ohne mit der Innenverkleidung zu kollidieren. Die Klappabschnitte umfassen in der Regel jeweils einen im Wesentlichen starren plattenartigen Trägerkörper, der an dem jeweiligen Verdeckgestänge schwenkbar montiert ist und der von einem die Sichtfläche bildenden Stoff der Innenverkleidung überspannt ist. Das Verschwenken derartiger Klappabschnitte erfolgt in der Regel durch Betätigung von jeweils zugeordneten Zugseilen, die mit der Kinematik bzw. den Verdeckgestängen des Verdecks verbunden sind.

Ein derartiger Klappabschnitt eines Cabriolet-Verdecks ist beispielsweise auch aus der DE 10 2004 047 910 A1 bekannt. Dieser Klappabschnitt weist an der dem Fahrzeuginnenraum abgewandten Seite eine Verbindungseinrichtung zur Anbindung eines Zugseils auf. Das Zugseil ist zur Fixierung an der Verbindungseinrichtung an seinem Ende mit einer ein Ankerelement bildenden Plombe versehen, die an der Verbindungseinrichtung eingehängt werden kann, so dass das Zugseil lösbar mit der Verbindungseinrichtung verbunden ist.

Der Erfindung liegt die Aufgabe zugrunde, ein Verdeck der einleitend genannten Gattung zu schaffen, das eine gegenüber dem Stand der Technik vereinfachte lösbare Anbindung eines Zugseils an einen Klappabschnitt bzw. ein Klappelement einer Innenverkleidung ermöglicht.

Diese Aufgabe ist erfindungsgemäß durch das Verdeck mit den Merkmalen des Patentanspruchs 1 gelöst.

Erfindungsgemäß weisen die Trägerkörper der Klappelemente bzw.-abschnitte mithin jeweils mindestens einen fensterartigen Ausschnitt auf, der von einem Fixierblock für das jeweiligen Zugseil übergriffen ist, der an der dem Fahrzeuginnenraum zugewandten Seite einen Befestigungskanal für das Zugseil aufweist.

Durch die erfindungsgemäße Ausbildung der Klappelemente bzw. von deren Trägerkörpern mit dem fensterartigen Ausschnitt können die jeweiligen Zugseile in einfacher Weise unter dem jeweiligen Fixierblock hindurchgefädelt und in den Befestigungskanal des jeweiligen Fixierblocks eingelegt werden. Eine am Ende des jeweiligen Zugseils angeordnete Verdickung bzw. Aufdickung kann dann als Widerlager dienen, das ein Lösen des Zugseils von dem betreffenden Fixierblock verhindert.

Die Zugseile können bei der erfindungsgemäßen Ausbildung somit in lösbarer Weise mit dem jeweiligen Klappelement verbunden werden, was insbesondere aus Wartungs- und Reparaturgründen vorteilhaft ist.

Insbesondere der fensterartige Ausschnitt des Trägerkörpers des jeweiligen Klappelements bietet einem Monteur ein hohes Maß an Bewegungsfreiheit zum Einlegen des Zugseils in den jeweiligen Befestigungskanal, d.h. zum Anbinden an den jeweiligen Fixierblock.

Der fensterartige Ausschnitt des Trägerkörpers kann einen im Wesentlichen rechteckigen oder auch runden oder ovalen Grundriss haben, sollte aber stets gewährleisten, dass beidseits des Fixierblocks hinreichend Freiraum verbleibt, um den Endbereich des jeweiligen Zugseils unter dem Fixierblock durchfädeln zu können.

Bei einer bevorzugten Ausführungsform des Verdecks nach der Erfindung sind die Befestigungskanäle der Fixierblöcke jeweils gestuft ausgebildet. Die Stufung der als Aufnahmen für die Endbereiche der Zugseile dienenden Befestigungskanäle ermöglicht eine besonders rutschsichere und damit spielfreie Verspannung bzw. Anordnung der Zugseile in den betreffenden Befestigungskanälen der Fixierblöcke.

Die Zugseile, die auf die Klappelemente wirken, sind mit ihren den Klappelementen abgewandten Enden jeweils bevorzugt mit der Kinematik des Verdecks derart verbunden, dass die Klappelemente beim Öffnen des Verdecks ohne zusätzliches Antriebsaggregat aus dem Bewegungspfad des jeweiligen Verdeckgestänges verschwenkt werden. Die Klappelemente sind insbesondere entgegen der Wirkrichtung des jeweiligen Zugseils vorgespannt, beispielsweise mittels einer Schenkelfeder oder dergleichen. Damit kann der Öffnungsvorgang bzw. Abklappvorgang zur Freigabe des Bewegungspfads des jeweiligen Verdeckgestänges einfach durch Lösen der jeweiligen Zugseilspannung bzw. Nachführen des jeweiligen Zugseils erfolgen.

Denkbar ist es auch, dass das Zugseil mit beiden Enden jeweils an einem erfindungsgemäß ausgebildeten Fixierblock des jeweiligen Klappelements oder auch mit beiden Enden an einem gemeinsamen Fixierblock eingehängt, der dann an der dem Fahrzeuginnenraum zugewandten Seite zwei Befestigungskanäle für jeweils ein Zugseilende aufweist. Das Zugseil ist dann vorzugsweise im Bereich des jeweiligen Verdeckgestänges an einer Umlenköse, einer Umlenkrolle oder dergleichen um 180° umgelenkt und überträgt Zugkräfte von dem jeweiligen Verdeckgestänge auf das betreffende Klappelement.

Die Trägerkörper der Klappelemente sind in bevorzugter Weise jeweils als Spritzgießteil ausgebildet, können aber alternativ auch ein Metalldruckgussteil oder dergleichen darstellen. Denkbar ist es auch, dass die Fixierblöcke jeweils als separates Bauteil ausgebildet sind, das mit dem jeweiligen Klappelementträgerkörper verbunden ist.
Um ein anmutendes Erscheinungsbild der Innenverkleidung des Verdecks zu gewährleisten, ist der jeweilige fensterartige Ausschnitt der Klappelemente bzw. von dessen Trägerkörper an der dem Fixierblock abgewandten Seite von einem die Sichtfläche bildenden Stoff der Innenverkleidung überspannt.

Zweckmäßigerweise weist das Zugseil ein Ankerelement oder dergleichen auf, das ein Widerlager für den Fixierblock bildet. Ein solches Ankerelement ist vorzugsweise von einem separaten Endstück bzw. einer Plombe des Zugseils gebildet und liegt in Einbaustellung an einer Seitenwand oder einer Stufung der Führungsbahn des Fixierblocks an. Eine derartige Plombe kann vor oder nach Einfädeln des Zugseils an dem Fixierblock an dem Zugseil angeordnet und zur Fixierung beispielsweise verpresst werden. Denkbar ist es auch, dass das Zugseil am Ende mit einer einstückigen Aufdickung versehen ist.

Die Plombe bzw. das Endstück des Zugseils hat vorzugsweise einen Durchmesser, der größer ist als die Breite der Führungsbahn des Fixierblocks, so dass ein Lösen des Zugseils von dem Klappabschnitt im Wesentlichen ausgeschlossen ist.

Im Bereich ihrer Seitenwände, an denen die Plombe des jeweiligen Zugseils anliegt, können die Fixierblöcke jeweils eine Ausnehmung aufweisen, die mit der Form der jeweiligen Plombe korrespondiert, so dass diese einen definierten Sitz hat.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel einer Innenverkleidung eines Verdecks nach der Erfindung ist in der Zeichnung schematisch vereinfacht dargestellt und wird in der nachfolgenden Beschreibung näher erläutert. Es zeigt
- Fig. 1: eine perspektivische Draufsicht auf eine Innenverkleidung eines Cabriolet-Verdecks;
- Fig. 2: eine Draufsicht auf den in Fig. 1 umstrichelt umrandeten Bereich II;
- Fig. 3: einen Schnitt durch die Innenverkleidung entlang der Linie III-III in Fig. 1;
- Fig. 4: eine perspektivische Ansicht eines Fixierbereichs für ein Zugseil eines Klappelements der Innenverkleidung; und
- Fig. 5: eine Draufsicht auf einen fensterartigen Ausschnitt eines Trägerkörpers des Klappelements von einem Fahrzeuginnenraum aus.

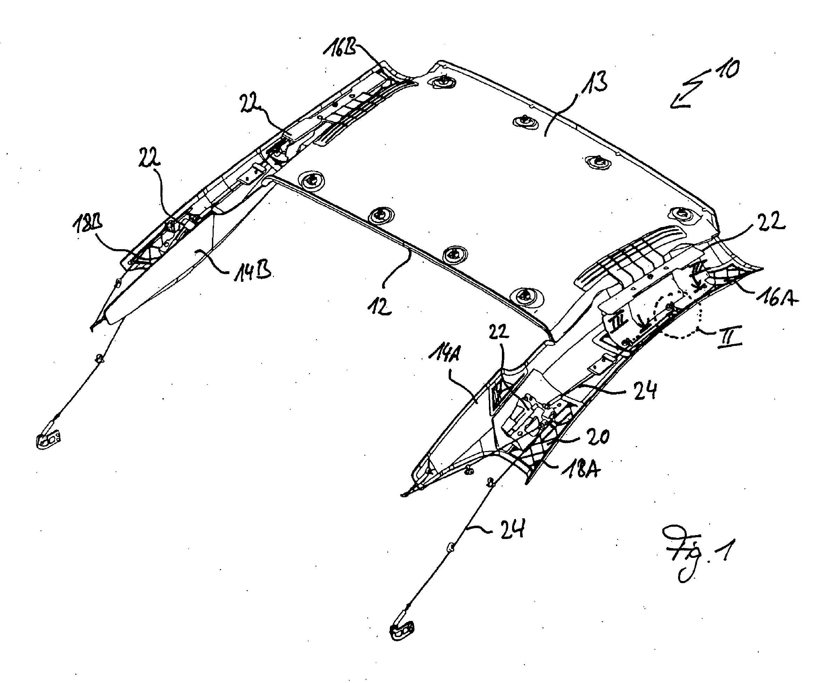

In Fig.1 ist eine Innenverkleidung 10 eines ansonsten nicht näher dargestellten Verdecks eines Cabriolets dargestellt. Das Verdeck ist als sogenanntes RHT (re-tractable hardtop) ausgebildet und umfasst zwei in Schließstellung des Verdecks in Fahrtrichtung hintereinander angeordnete starre Verdeckelemente, von denen ein hinteres mit einem Heckfenster ausgestattet ist. Zum Antrieb weist das Verdeck beidseits jeweils ein durch Hydraulikzylinder oder dergleichen angetriebenes Verdeckgestänge auf, das mit den starren Verdeckelementen verbunden ist, welche im geöffneten Zustand des Verdecks, d. h. bei Freigabe des Fahrzeuginnenraums in einem ebenfalls nicht näher dargestellten heckseitigen Verdeckablagekasten angeordnet sind. In Schließstellung sind die Verdeckelemente sowie das Verdeckgestänge innenseitig, d. h. gegenüber dem Fahrzeuginnenraum mittels der Innenverkleidung 10 verblendet.

Die Innenverkleidung 10 umfasst einen flächigen, im Wesentlichen rechteckigen, zentralen Stoffzuschnitt 12, der an einem plattenartigen Kunststoffträger 13 aufgespannt ist und so die Innenseite des vorderen Verdeckelementes überspannt. Des Weiteren umfasst die Innenverkleidung 10 jeweils entlang der Seitenränder mit dem Stoffzuschnitt 12 vernähte seitliche Segel 14A bzw. 14B aus einem faltbaren Stoff, der dem Stoff des Stoffzuschnitts 12 entspricht. Die Segel 14A und 14B erstrecken sich jeweils von der jeweiligen A-Säule nach hinten bis zu dem Verdeckablegkasten.

Im Bereich der Segel bzw. Stoffzuschnitte 14A und 14B weist die Innenverkleidung 10 des Weiteren jeweils zwei Klappelemente 16A und 18A bzw. 16B und 18B auf, durch die die seitlichen Segel 14A und 14B aus dem Bewegungspfad des jeweiligen Verdeckgestänges geklappt werden können.

Die Klappelemente bzw. -abschnitte 16A, 18A, 16B und 18B weisen jeweils einen flächigen Trägerkörper 20 auf, der ein Kunststoffspritzgießteit darstellt und über eine Scharnieranordnung 22 an dem jeweiligen Verdeckgestänge schwenkbar montiert ist.

Die Klappelemente 16A, 18A, 16B und 18B sind des Weiteren jeweils durch eine Schenkelfeder oder dergleichen in Richtung Fahrzeuginnenraum vorgespannt und werden durch ein aus einem Drahtgeflecht bestehendes Zugseil 24, das mit der Verdeckkinematik verbunden ist, in der in Fig. 1 dargestellten Schließstellung gehalten. Beim Öffnen des Verdecks wird die Spannung des jeweiligen Zugseils 24 durch die Bewegung der Verdeckgestängeelemente verringert, so dass die Klappelemente 16A, 18A, 16B und 18B selbsttätig bzw. zwangsgesteuert in Öffnungsrichtung verschwenken und den Bewegungspfad für die Verdeckgestänge freigeben.

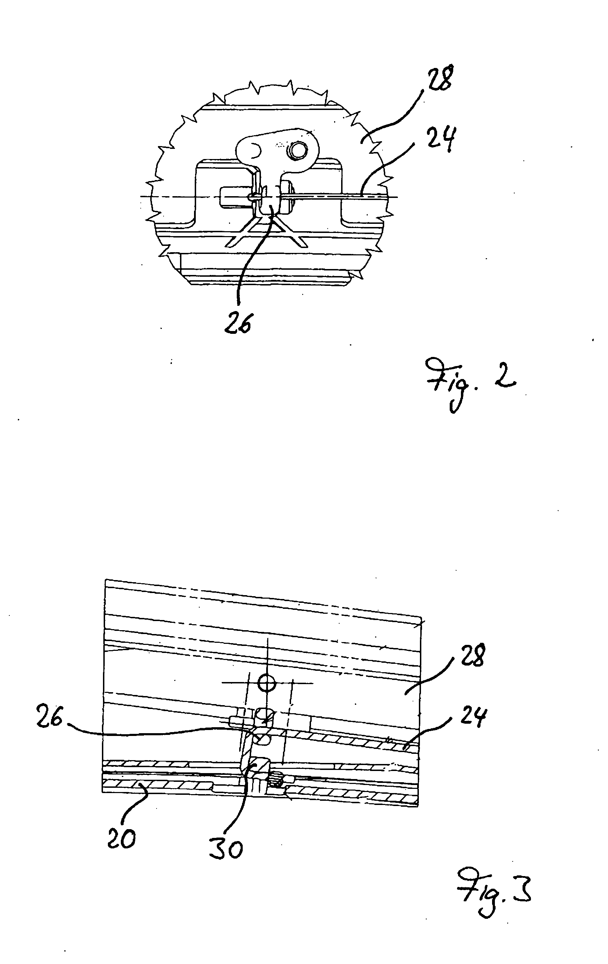

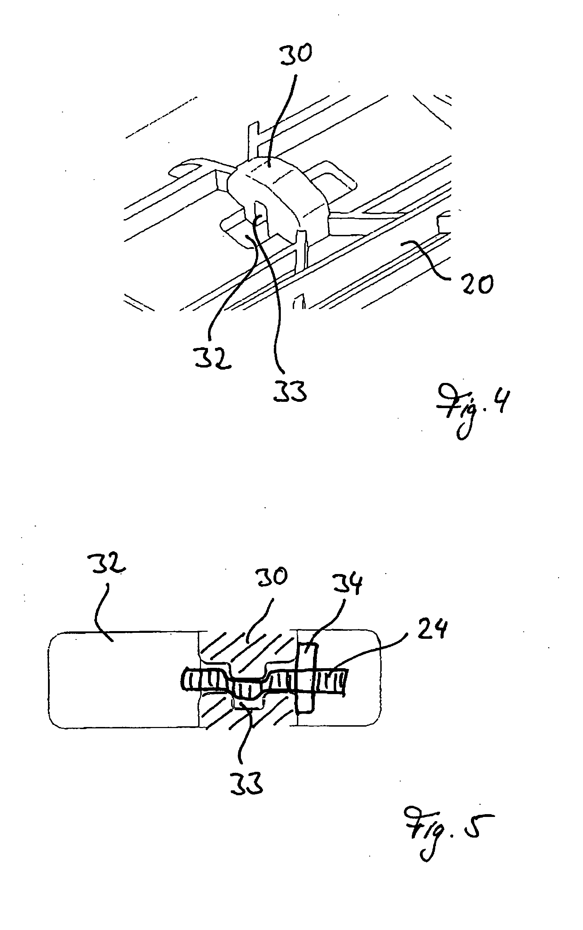

Wie den Figuren 2 und 3 zu entnehmen ist, sind die Zugseile 24 jeweils an einer Umlenköse 26 umgelenkt, welche am jeweiligen Verdeckgestänge 28 angeordnet ist und oberhalb eines Fixierblocks 30 des Trägerkörpers 20 des jeweiligen Klappelements 16A, 18A, 16B bzw. 18B angeordnet ist. Der Fixierblock 30, der insbesondere Fig. 4 zu entnehmen ist, ist brückenartig ausgebildet und überspannt einen im Wesentlichen rechteckigen, fensterartigen Ausschnitt 32 des verrippten Trägerkörpers 20 in Querrichtung des Ausschnitts 32.

An seiner Unterseite, d. h., an der dem Fahrzeuginnenraum zugewandten Seite, weist der Fixierblock 30 einen labyrinthartigen, doppelt gestuften Befestigungskanal 33 auf, in dem ein Endabschnitt des jeweiligen Zugseils 24 eingelegt und U-förmig umgelenkt ist. Das Zugseil 24, das durch Umlenkung an der Umlenköse 26 und dem Fixierblock 30 insgesamt eine U-förmige Umlenkung erfährt, hat an seinem Ende einen als Plombe 34 ausgebildeten Anker, der im gespannten Zustand des Zugseils 24, d. h. in Montagestellung, an einer Seitenwand des Fixierblocks 30 anliegt. Durch die Plombe 34 und die zusätzliche, eine Verklemmung bewirkende Umlenkung des Zugseils 24 in dem doppelt gestuften Befestigungskanal 33 ist eine sichere Verbindung des Zugseils 24 mit dem Trägerkörper 20 des jeweiligen Klappabschnitts 16A, 18A, 16B bzw. 18B gewährleistet.

Des Weiteren ist der fensterartige Ausschnitt 32 an der dem Fixierblock 30 abgewandten Seite von dem Stoff des jeweiligen Segels 14A bzw. 14B überspannt, der die Sichtfläche der Innenverkleidung 10 bildet.

Durch die Umlenkung des Zugseils in dem als Klemmeinheit dienenden Fixierblock 30 kann sich das Zugseil nicht selbständig lösen. Trotzdem ist durch Ausbildung des fensterartigen Ausschnitts 32 eine einfache Montage und Demontage des Zugseils 24 möglich, und zwar auch im mit dem Stoff des Segels 14A bzw. 14B kaschierten Zustand des als Blende dienenden jeweiligen Trägerkörpers 20.

### Bezugszeichen

- 10: Innenverkleidung
- 12: Stoffzuschnitt
- 13: Kunststoffträger
- 14A, 14B: Segel
- 16A, 16B: Klappelement
- 18A, 18B: Klappelement
- 20: Trägerkörper
- 22: Scharnieranordnung
- 24: Zugseil
- 26: Umlenköse
- 28: Verdeckgestänge
- 30: Fixierblock
- 32: fensterartiger Ausschnitt
- 33: Befestigungskanal
- 34: Plombe

## Patentansprüche

1. Verdeck eines Cabriolets, mit mindestens einem starren Verdeckelement und einer Innenverkleidung (10), die das Verdeckelement innenseitig überspannt und bezogen auf die Fahrzeuglängsmittelebene beidseits jeweils zumindest ein Klappelement (16A, 16B, 18A, 18B) umfasst, das beim Öffnen des Verdecks aus einem Bewegungspfad eines Verdeckgestänges geklappt wird, und an dem ein Zugseil (24) befestigt ist, mittels dessen ein Schwenkvorgang des jeweiligen Klappelements (16A, 16B, 18A, 18B) auslösbar ist, wobei die Klappelemente (16A, 16B, 18A, 18B) jeweils einen im Wesentlichen starren Trägerkörper (20) umfassen, der an dem jeweiligen Verdeckgestänge schwenkbar montiert ist, **dadurch gekennzeichnet, dass** die Trägerkörper (20) jeweils mindestens einen fensterartigen Ausschnitt (32) aufweisen, der von einem Fixierblock (30) für das jeweilige Zugseil übergriffen ist, der an der dem Fahrzeuginnenraum zugewandten Seite mindestens einen Befestigungskanal Führungsbahn (33) für das Zugseil (24) aufweist.

2. Verdeck nach Anspruch 1, **dadurch gekennzeichnet, dass** der Befestigungskanal (33) gestuft ausgebildet ist.

3. Verdeck nach Anspruch 1 oder 2, **dadurch gekennzeichnet, dass** der Befestigungskanal (33) bezogen auf die Längsmittelebene des Fixierblocks (30) spiegelsymmetrisch ausgebildet ist.

4. Verdeck nach einem der Ansprüche 1 bis 3, **dadurch gekennzeichnet, dass** der fensterartige Ausschnitt (32) an der dem Fixierblock (30) abgewandten Seite von einem Stoff der Innenverkleidung (10) überspannt ist.

5. Verdeck nach einem der Ansprüche 1 bis 4, **dadurch gekennzeichnet, dass** an einer Stufung der Führungsbahn (33) ein Endstück bzw. eine Plombe (34) des Zugseils (24) gelagert ist.

6. Verdeck nach einem der Ansprüche 1 bis 5, **dadurch gekennzeichnet, dass** die Klappelemente (16A, 16B, 18A, 18B) entgegen der Wirkrichtung des jeweiligen Zugseils (24) vorgespannt sind.
